# EUROPÄISCHE PATENTSCHRIFT

(11) **EP 2 882 790 B1**
(45) Veröffentlichungstag und Bekanntmachung des Hinweises auf die Patenterteilung: **27.04.2016**
(21) Anmeldenummer: 13745639.8
(22) Anmeldetag: 02.08.2013
(51) Int. Cl.: C08G 61/08, C09D 165/00

(54) **KAUTSCHUKMATERIAL MIT BARRIEREMATERIAL AUS CYCLOOLEFIN-COPOLYMEREN**
RUBBER MATERIAL WITH BARRIER MATERIAL MADE OF CYCLOOLEFIN COPOLYMERS
MATÉRIAU CAOUTCHOUTIQUE COMPORTANT UN MATÉRIAU DE BARRIÈRE EN COPOLYMÈRES DE CYCLOOLÉFINE

(30) Priorität: 13.08.2012 US 201261682334 P; 13.08.2012 EP 12180272
(43) Veröffentlichungstag der Anmeldung: 17.06.2015
(73) Patentinhaber: BASF SE, 67056 Ludwigshafen am Rhein (DE)
(72) Erfinder: SMIT, Theo, 69117 Heidelberg (DE); MÜLLER, Kevin, 65529 Waldems (DE); DAHMEN, Stefan, 67098 Bad Dürkheim (DE); NEGRETE HERRERA, Norma Lidia, 67133 Maxdorf (DE); STURM, Bernhard, 67071 Ludwigshafen (DE)
(74) Vertreter: BASF IP Association
(86) Internationale Anmeldenummer: PCT/EP2013/066287
(87) Internationale Veröffentlichungsnummer: WO 2014/026865

(56) Entgegenhaltungen:
- WO-A1-2006/129379
- WO-A1-2012/028530

## Beschreibung

Die Erfindung betrifft die Verwendung eines bestimmten Copolymers zur Verringerung der Gasdurchlässigkeit von Kautschukmaterial. Die Erfindung betrifft auch ein Kautschukmaterial, ausgerüstet mit einem Barrierematerial in Form des Copolymers. Das Copolymer ist herstellbar durch ringöffnende Metathesepolymerisation von a) einem ersten Olefinmonomer, ausgewählt aus der Gruppe bestehend aus cyclischen Olefinmonomeren mit mindestens einer endocyclischen C-C-Doppelbindung, wobei in alpha-Position zu der Doppelbindung kein ein Wasserstoffatom tragendes tertiäres Kohlenstoffatom vorhanden ist und b) einem zweiten Olefinmonomer mit einer C-C-Doppelbindung, ausgewählt aus der Gruppe bestehend aus cyclischen Olefinmonomeren mit einer endocyclischen C-C-Doppelbindung, wobei in mindestens einer alpha-Position zu der Doppelbindung ein Wasserstoffatom tragendes tertiäres Kohlenstoffatom vorhanden ist und, wobei das Copolymer zumindest teilweise oxidiert ist.

Bei Fahrzeugluftreifen ist es wichtig, dass gewährleistet ist, dass die Druckluft oder das Füllgas mit dem erforderlichen Druckwert und dem notwendigen Gasvolumen für möglichst lange Zeit einen funktionsfähigen Reifenbetrieb gestattet. Üblicherweise sind deshalb herkömmliche Luftreifen im Reifeninnenraum mit einer gasundurchlässigen bzw. möglichst niedrig gasdurchlässigen Gummischicht versehen. Diese Reifeninnenschicht dient zur Abdichtung des gasgefüllten Innenraums und ersetzt bei schlauchlosen Reifen den Schlauch. Als Material kann z.B. Halobutyl enthaltende, vulkanisierbare Kautschukmischung oder Butylkautschuk verwendet werden.

Durch ringöffnende Metathesepolymerisation hergestellte Polymere (Polyalkenamere) werden beschrieben in der EP 1847558 A1 oder in der US-Patentanmeldung 61/257063. Durch ringöffnende Metathesepolymerisation aus Cycloolefinen hergestellte Homopolymere aus Cycloocten oder aus Cyclopentadien sind häufig spröde, duroplastische oder nicht filmbildende Materialien, welche für die Bildung von flexiblen Beschichtungen ungeeignet sind oder sie haben schlechte Barriereeigenschaften oder die Glasübergangstemperatur ist nicht auf den gewünschten Wert einstellbar. Polyalkenamere werden auch beschrieben in der US 4025708, US 3778420, EP0488135, WO 2009/154849, WO 00/46255 und WO 02/26858. Die Dokumente beschreiben nicht die Verwendung von oxidierten Polyalkenameren für Gasbarriereanwendungen.

Die Verwendung von bestimmten, durch ringöffnende Metathesepolymerisation aus Cycloolefinen hergestellten Copolymeren als Gasbarriere für Kautschukmaterialien ist beschrieben in der nicht vorveröffentlichten internationalen Patentanmeldung WO 2012/107418 A1 sowie in der WO 2012/028530 A1.

Aufgabe der vorliegenden Erfindung war es, alternative Barrierematerialien für Kautschukprodukte, insbesondere für Luftreifen zur Verfügung zu stellen, welche einfach, kostengünstig und effizient anwendbar sind und/oder gute oder verbesserte Gasbarriereeigenschaften aufweisen.

Gegenstand der Erfindung ist die Verwendung eines Copolymers zur Verringerung der Gasdurchlässigkeit von Kautschukmaterial, wobei das Copolymer herstellbar ist durch ringöffnende Metathesepolymerisation von
a) mindestens einem ersten Olefinmonomer, ausgewählt aus der Gruppe bestehend aus cyclischen (vorzugsweise monocyclischen) Olefinmonomeren mit mindestens einer endocyclischen C-C-Doppelbindung, wobei in alpha-Position zu der Doppelbindung kein ein Wasserstoffatom tragendes tertiäres Kohlenstoffatom vorhanden ist und
b) mindestens einem zweiten Olefinmonomer, ausgewählt aus der Gruppe bestehend aus cyclischen Olefinmonomeren mit einer (d.h. einer einzigen) endocyclischen C-C-Doppelbindung, wobei in mindestens einer alpha-Position zu der Doppelbindung ein Wasserstoffatom tragendes tertiäres Kohlenstoffatom vorhanden ist,
wobei das Copolymer zumindest teilweise oxidiert ist und
wobei das Copolymer nicht oder zu weniger als 1 mol%, bezogen auf die Summe der Monomere, aus polycyclischen Olefinmonomeren mit mindestens zwei C-C-Doppelbindungen hergestellt ist.

Gegenstand der Erfindung ist auch ein Kautschukmaterial, ausgerüstet mit einem Barrierematerial in Form des oben genannten und unter näher beschriebenen Copolymers, wobei das Copolymer zumindest teilweise oxidiert ist.

Vorzugsweise wird das Copolymer in Form einer Polymerschicht einer Dicke von mindestens 1 µm eingesetzt. Vorzugsweise beträgt das molare Verhältnis von Olefinmonomeren a) zu polycyclischen Olefinmonomeren b) von 99:1 bis 1:99; bevorzugt ist von 90:10 bis 10:90; besonders bevorzugt ist 50:50 bis 80:20.

Gegenstand der Erfindung ist auch ein Luftreifen, umfassend ein erfindungsgemäßes Kautschukmaterial.

Gegenstand der Erfindung ist auch ein Verfahren zur Ausrüstung eines Kautschukmaterials mit Gasbarriereeigenschaften, wobei mindestens eines der oben genannten und nachfolgend näher beschriebenen Copolymere auf das Kautschukmaterial aufgebracht oder in das Kautschukmaterial eingebracht wird.

Das mit dem Copolymer erfindungsgemäß versehene Kautschukmaterial weist eine Gasbarriereeigenschaft auf (z.B. gegen Luft, Sauerstoff, Stickstoff, Argon, Kohlendioxid, Wasserdampf etc.), wobei die Barriereeigenschaft durch die erfindungsgemäße Verwendung des Copolymers erzeugt oder verstärkt wird. Der Begriff Barriereeigenschaft bedeutet eine gegenüber unbeschichtetem Trägersubstrat verringerte Transmission bzw. Permeabilität gegenüber bestimmten Stoffen. Sauerstoff- bzw. Gasbarriereeigenschaften können z.B. mit dem in den Beispielen beschriebenem Permeabilitätstest gemessen werden. Vorzugsweise beträgt die Sauerstofftransmissionsrate für erfindungsgemäß beschichtete Substrate weniger als 30%, insbesondere weniger als 15% oder weniger als 5%, z.B. zwischen 0,1% und 3% des Wertes der unbehandelten Substrate (gemessen bei 23°C und 85% relativer Luftfeuchtigkeit).

Die erfindungsgemäß eingesetzten Copolymere sind herstellbar durch ringöffnende Metathesepolymerisation. Unter einer Metathesereaktion wird ganz allgemein eine chemische Reaktion zwischen zwei Verbindungen verstanden, bei der eine Gruppe zwischen beiden Reaktionspartnern ausgetauscht wird. Handelt es sich dabei um eine organische Metathesereaktion, werden formal die Substituenten an einer Doppelbindung ausgetauscht. Von besonderer Bedeutung ist jedoch die metallkomplexkatalysierte ringöffnende Metathesereaktion von organischen Cycloolefinverbindungen ("ring opening metathesis polym erization" kurz ROMP), durch die polymere Polyolefine zugänglich werden. Als katalytische Metallkomplexe werden insbesondere Metallcarbenkomplexe der allgemeinen Struktur Met=CR₂ eingesetzt, wobei R einen organischen Rest bedeutet. Aufgrund der hohen Hydrolyseempfindlichkeit der Metallcarbenkomplexe können die Metathesereaktionen in wasserfreien organischen Lösungsmitteln oder den Olefinen selbst durchgeführt werden (siehe beispielsweise US-A 2008234451, EP-A 0824125). Zur Vermeidung von aufwändigen Reinigungsschritten zur Abtrennung von große Mengen an Lösungsmittel oder an nicht umgesetzten Olefinen kann die Metathesereaktion von Olefinen auch in wässrigem Medium durchgeführt werden (DE 19859191; US-Patentanmeldung 61/257063).

Die erfindungsgemäß eingesetzten Copolymere werden gebildet aus
a) mindestens einem ersten Olefinmonomer, ausgewählt aus der Gruppe bestehend aus cyclischen Olefinmonomeren mit mindestens einer endocyclischen C-C-Doppelbindung, wobei in alpha-Position zu der Doppelbindung kein ein Wasserstoffatom tragendes tertiäres Kohlenstoffatom vorhanden ist und
b) mindestens einem zweiten Olefinmonomer, ausgewählt aus der Gruppe bestehend aus cyclischen Olefinmonomeren mit einer endocyclischen C-C-Doppelbindung, wobei in mindestens einer alpha-Position zu der Doppelbindung ein Wasserstoffatom tragendes tertiäres Kohlenstoffatom vorhanden ist,
wobei das Copolymer nicht oder zu weniger als 1 mol%, vorzugsweise zu weniger als 0,9 mol% oder weniger als 0,8 mol%, bezogen auf die Summe der Monomere, aus polycyclischen Olefinmonomeren mit mindestens zwei C-C-Doppelbindungen hergestellt ist.

Bei den Copolymeren handelt es sich vorzugsweise um reine, d.h. nicht mit Heteroatomen substituierte Kohlenwasserstoffe. Die Copolymere sind vorzugsweise zumindest teilweise an den zur endocyclischen Doppelbindung alpha-ständigen tertiären C-Atomen oxidiert.

Das molare Verhältnis von Olefinmonomeren a) zu Olefinmonomeren b) beträgt vorzugsweise von 99:1 bis 1:99; bevorzugt ist von 90:10 bis 10:90; besonders bevorzugt ist 50:50 bis 80:20.

Olefinmonomere a) sind z.B. Cyclobuten, Cyclopenten, 2-Methylcyclopenten-1, 4-Methylcyclopenten-1, Cyclohexen, 2-Methylcyclohexen-1, 4-Methylcyclohexen-1, 1,4-Dimethylcyclohexen-1, 3,3,5-Trimethylcyclohexen-1, Cyclohepten, 1,2-Dimethylcyclohepten-1, cis-Cycloocten, trans-Cycloocten, 2-Methylcycloocten-1, 4-Methylcycloocten-1, 5-Methylcycloocten-1, Cyclononen, Cyclodecen, Cycloundecen, Cyclododecen, Cyclooctadien, Cyclopentadien und Cyclohexadien, wobei monocyclische Olefine mit einer C-C-Doppelbindung, insbesondere cis-Cycloocten besonders bevorzugt sind.

Bevorzugte, nur eine einzige C-C-Doppelbindung aufweisende cyclische Olefinmonomere b) sind 3-Alkyl-cycloalkene-1 mit vorzugsweise 1 bis 10 oder 1 bis 4 C-Atomen in der Alkylgruppe und vorzugsweise 5 bis 8 C-Atomen im Cycloalkenring sowie bicyclische Olefine, z.B. Norbornen. Geeignet sind z.B. 3-Methylcyclopenten-1, 3-Butylcyclopenten-1, 3-Methylcyclohexen-1, 3-Methylcycloocten-1, 3-Propylcyclopenten-1 und 3-Methylcycloocten-1. Besonders bevorzugt ist Norbornen. Vorzugsweise werden als Olefinmonomer b) keine polycyclischen Diene verwendet. Als polycyclisch werden Verbindungen mit mindestens zwei Ringsystemen verstanden.

In einer bevorzugten Ausführungsform ist das Copolymer gebildet durch ringöffnende Metathesepolymerisation von cis-Cycloocten und Norbornen.

Die Herstellung der erfindungsgemäß eingesetzten Copolymere erfolgt vorzugsweise in wässrigem Medium. Dabei kann die ringöffnende Metathesereaktion dergestalt erfolgen, dass Wasser und Dispergiermittel in einem Polymerisationsgefäß vorgelegt werden, ein als Katalysator eingesetzter organometallischer Carbenkomplex im Cycloolefin gelöst wird, die Cycloolefin/ Metallkomplexlösung in die wässrige Dispergiermittellösung eingebracht wird, die dabei gebildete Cycloolefin/Metallkomplex-Makroemulsion in eine Cycloolefin/Metallkomplex-Miniemulsion überführt wird und diese bei Raumtemperatur zu einer wässrigen Polyolefin-Dispersion umgesetzt wird. Vorzugsweise erfolgt die ringöffnende Metathesereaktion dergestalt, dass wenigstens eine Teilmenge des Wassers, wenigstens eine Teilmenge Dispergiermittel, wenigstens eine Teilmenge der Monomeren in Form einer wässrigen Monomerenmakroemulsion mit einem mittleren Tröpfchendurchmesser ≥ 2 µm vorgelegt werden, danach unter Energieeintrag die Monomerenmakroemulsion in eine Monomerenminiemulsion mit einem mittleren Tröpfchendurchmesser ≤ 1500 nm überführt wird, und danach der erhaltenen Monomerenminiemulsion bei Polymerisationstemperatur die gegebenenfalls verbliebene Restmenge des Wassers, die gegebenenfalls verbliebene Restmenge des Dispergiermittels, die gegebenenfalls verbliebene Restmenge der Monomeren und die Gesamtmenge eines als Katalysator eingesetzten organometallischen Carbenkomplexes zugegeben werden.

Als Metathesekatalysatoren können organometallische Carbenkomplexe eingesetzt. Metalle sind z.B. Übergangsmetalle der 6., 7. oder 8. Nebengruppe, bevorzugt Molybdän, Wolfram, Osmium, Rhenium oder Ruthenium, wovon Osmium und Ruthenium bevorzugt sind. Besonders bevorzugt werden Ruthenium-Alkylidenkomplexe eingesetzt. Solche Metathesekatalysatoren sind aus dem Stand der Technik bekannt und werden z.B. in R.H. Grubbs (Ed.) "Handbook of Metathesis", 2003, Wiley-VCH, Weinheim, WO 93/20111, WO 96/04289, WO 97/03096, WO 97/06185, J. Am. Soc. 1996, S. 784-790, Dalton Trans. 2008, S. 5791-5799 und in Coordination Chemistry Reviews, 2007, 251, S. 726-764 beschrieben.

Die Konzentration der Copolymeren in den zur Beschichtung eingesetzten Lösungen oder wässrigen Dispersionen beträgt vorzugsweise mindestens 1 Gew.-%, insbesondere mindestens 5 Gew.-% und bis zu 50 oder bis zu 70 Gew.%. Meistens liegt der Gehalt der Copolymeren in der wässrigen Dispersion bei 10 bis 60 Gew.% oder bei 15 bis 55 Gew.%, insbesondere bei 20 bis 50 Gew.-%.

Bevorzugte wässrige Dispersionen der Copolymere haben bei pH-Werten von 4 und einer Temperatur von 20°C eine Viskosität von 10 bis 150 000 mPas, oder 200 bis 5000 mPas (gemessen mit einem Brookfield-Viskosimeter bei 20°C, 20 UpM, Spindel 4). Die mittlere Teilchengröße der in der wässrigen Dispersion dispergierten Copolymerpartikel beträgt beispielsweise von 0,02 bis 100 µm, vorzugsweise 0,05 bis 10 µm. Sie kann z. B. mit Hilfe der optischen Mikroskopie, der Lichtstreuung, der hydrodynamischen Chromatographie oder der Gefrierbruchelektronenmikroskopie bestimmt werden.

Die Oxidation der Copolymere kann durch Lagern in einer sauerstoffhaltigen Umgebung, vorzugweise unter Verwendung von Strahlungsenergie, thermischer Energie und/oder Oxidationsbeschleunigern erfolgen. Die Oxidation der Copolymere kann beispielsweise an der Luft unter Tageslicht und bei Raumtemperatur (20°C) erfolgen, z.B. lagern von Copolymer bzw. von Copolymerfilmen oder von mit dem Copolymer beschichteten Substraten für z.B. zwei bis drei Wochen. Die Oxidation kann beschleunigt werden durch Strahlungsenergie, thermische Energie, Gamma-Strahlung und/oder chemischen Oxidationsbeschleunigern, z.B. hierfür bekannten Übergangsmetallverbindungen. Als Oxidationsmittel können z.B. Sauerstoff und Peroxide verwendet werden.

Die Kautschukbestandteile des Kautschukmaterials können beispielsweise ausgewählt sein aus Dienkautschuk, Naturkautschuk, Butylkautschuk, synthetischem Polyisopren, Polybutadien, Styrol-Butadien-Copolymer, Isopren-Butadien-Kautschuk, Styrol-Isopren-Butadien-Kautschuk, Acrylnitril-Butadien-Kautschuk, Ethylen-Propylen-Kautschuk und Chloroprenkautschuk.

Vorzugsweise handelt es sich bei dem Kautschukmaterial um einen Bestandteil eines Luftreifens, insbesondere eine Reifeninnenschicht eines Luftreifens oder eine Reifenkarkasse eines Luftreifens.

In einer Ausführungsform werden die Kautschukmaterialien selber mit einer Lösung oder wässrigen Dispersion mindestens eines der oben beschriebenen Copolymere ausgerüstet. In einer anderen Ausführungsform werden Bestandteile eines kautschukhaltigen Gegenstands, insbesondere von Luftreifen mit dem Barrierematerial ausgerüstet und in den kautschukhaltigen Gegenstand, vorzugsweise Luftreifen, eingebracht. Beispielsweise kann die Textilkordeinlage von Luftreifen mit den erfindungsgemäß einzusetzenden Copolymeren ausgerüstet werden.

Gegenstand der Erfindung ist auch ein Verfahren zur Ausrüstung eines Kautschukmaterials, wobei mindestens eines der hierin beschriebenen Copolymere auf das Kautschukmaterial aufgebracht oder in das Kautschukmaterial eingebracht wird. Die Ausrüstung kann z.B. nach einer oder mehreren der folgenden Methoden erfolgt: Imprägnierung durch Tränkung, durch Besprühen oder durch Bestreichen, Beschichten, Kalandrieren. Die zur Beschichtung eingesetzten Lösungen oder Dispersionen können weitere Zusatz- oder Hilfsstoffe enthalten, z.B. Verdicker zur Einstellung der Rheologie, Benetzungshilfsmittel, organische oder anorganische Füllstoffe oder Bindemittel.

Vorzugsweise wird das Copolymer in Form einer wässrigen Dispersion des Copolymers aufgebracht und es wird durch Trocknen der Dispersion auf dem Trägersubstrat ein Film gebildet.

Gegenstand der Erfindung ist auch ein Luftreifen, umfassend ein erfindungsgemäßes Kautschukmaterial. Dabei kann das Copolymer auf eine oder mehrere der folgenden Methoden aufgebracht sein:
- aufbringen auf mindestens einem Teil der Oberfläche oder auf der gesamten Oberfläche der Reifeninnenschicht;
- einbringen in das Material der Reifeninnenschicht;
- als Film, als trägerlose Folie oder als Beschichtung eines Folienträgers, wobei die Filme oder Folien zusätzlich zu einer kautschukbasierten Reifeninnenschicht oder als Ersatz für eine Reifeninnenschicht in das Reifeninnere eingebracht sein können;
- als Binder oder Beschichtung einer Fasercordeinlage des Luftreifens;
- als Laminat zwischen zwei oder mehr Trägerfolien, das in das Reifeninnere eingebracht ist.

Das Aufbringen als Film kann als Sprüh- oder Streichfilm erfolgen, z.B. durch Walzen-, Rakel-, Luftbürsten- oder Gussstreichverfahren. Das Aufbringen kann auch als Folie erfolgen, welche als Träger dient und dann mit der Karkasse verklebt oder vernetzt (vulkanisiert) wird. Geeignete Folienträger sind z.B. Kautschuk-, Polyolefin-, Polyester-, Polyamid- oder Polyurethanfolienträger.

Alternativ kann auch eine Anwendung des Copolymers in Form eines Laminats zwischen zwei Trägerfolien erfolgen, wobei das Laminat dann mit der Karkasse verklebt oder vernetzt wird.

Die Copolymere können auch als selbsttragender Film eingesetzt werden.

Die Anwendung kann beispielsweise auf Beschichtungsmaschinen in der Weise vorgenommen werden, dass man auf eine Trägerfolie aus einem Kunststoff die Beschichtungszusammensetzung aufträgt. Sofern bahnförmige Materialien verwendet werden, wird die Polymerdispersion üblicherweise aus einer Wanne über eine Auftragswalze aufgetragen und mit Hilfe einer Luftbürste egalisiert.

Andere Möglichkeiten, die Beschichtung aufzubringen, gelingen z.B. mit Hilfe des Reverse Gravure-Verfahrens, mit Sprühverfahren oder mit einem Rollrakel oder mit anderen, dem Fachmann bekannten Beschichtungsverfahren. Das Trägersubstrat ist dabei auf mindestens einer Seite beschichtet, d.h. es kann einseitig oder beidseitig beschichtet sein.

Um die Haftung auf einer Folie noch zu verbessern, kann die Trägerfolie zuvor einer CoronaBehandlung unterworfen oder alternativ Haftvermittler, wie z.B. Polyethylenimine, eingesetzt werden. Die auf die flächigen Materialien aufgetragenen Mengen betragen z.B. vorzugsweise 1 bis 800 g (Polymer, fest) pro m², vorzugsweise 1 bis 400 g/m² oder 5 bis 200 g/m². Nach dem Aufbringen der Beschichtungszusammensetzungen auf die Trägersubstrate wird das Lösungs- bzw. Dispergiermittel verdampft. Hierfür kann man beispielsweise bei kontinuierlichem Arbeiten das Material durch einen Trocknerkanal führen, der mit einer Infrarot-Bestrahlungsvorrichtung ausgestattet sein kann. Danach wird das beschichtete und getrocknete Material über eine Abkühlwalze geführt und schließlich aufgewickelt. Die Dicke der getrockneten Beschichtung beträgt mindestens 1 µm vorzugsweise 1 bis 400 µm, besonders bevorzugt 5 bis 200 µm. Die Dicke der Trägerfolien liegt im Allgemeinen in dem Bereich von 10 µm bis 1 cm. Das Copolymer an der Oberfläche der Copolymerschicht ist dabei zumindest teilweise oxidiert. Bei dickeren Schichten kann der Kern der Beschichtung nicht oxidiertes Copolymer enthalten.

Die erfindungsgemäß beschichteten Substrate zeigen eine hervorragende Gasbarrierewirkung.

### Beispiele

Es wurden folgende Homopolymer- und Copolymerdispersionen eingesetzt (Monomerverhältnisse der Copolymere beziehen sich auf molare Verhältnisse):

### Dispersion D1 (Vergleich):

30%ige wässrige Polyoctenamer-Dispersion, hergestellt durch ringöffnende Metathesepolymerisation (ROMP) aus cis-Cycloocten unter Verwendung eines Ruthenium-alkylidenkatalysators.
Zahlenmittlere Teilchengröße: 378 nm,

### Dispersion D2:

30%ige wässrige Poly(norbornen-co-octenamer)-Dispersion, hergestellt durch ringöffnende Metathesepolymerisation (ROMP) aus Norbornen und cis-Cycloocten (50:50) unter Verwendung eines Ruthenium-alkylidenkatalysators.
Zahlenmittlere Teilchengröße: 499 nm

### Dispersion D3:

30%ige wässrige Poly(norbornen-co-octenamer)-Dispersion, hergestellt durch ringöffnende Metathesepolymerisation (ROMP) aus Norbornen und cis-Cycloocten (20:80) unter Verwendung eines Ruthenium-alkylidenkatalysators.
Zahlenmittlere Teilchengröße: 307 nm

### Bestimmung des Oxidationsgrads der Polyalkenamerfolie:

Der Oxidationsgrad der Polymere kann mittels Infrarot-Spektroskopie (Nexus 470 der Fa.Thermo Fischer Scientific FTIR Spektrometer mit Diamant ATR-Einheit (Smart Orbit ATR)) bestimmt werden. Die Auswertung erfolgt über die Extinktion der Carbonyl-Bande bei 1710 +/- 5 cm⁻¹ mit Basislinie im Bereich 1855 +/- 5 cm⁻¹ und 1498 +/-5 cm⁻¹ sowie Extinktion der C-C-Doppelbindung-Bande bei 970 +/- 5 cm⁻¹ mit Basislinie im Bereich 1001 +/- 5 cm⁻¹ und 918 +/- 5 cm⁻¹. Der Quotient aus den Extinktionen der Carbonylgruppe und der C-C-Doppelbindung wird berechnet. Die Ergebnisse sind in Tabelle 1 dargestellt.

**Tabelle 1: Polyalkenamer-Oxidationsgrad vor und nach drei Woche Lagerung an der Luft bei Raumtemperatur (ca. 20°C)**

| Probe | C=O/C=C vor Lagerung | C=O/C=C nach Lagerung |
|---|---|---|
| D1 | 0,01 | 0,01 |
| D3 | 0,03 | 1,71 |

### Bestimmung der Sauerstoffpermeabilität einer selbsttragenden Polyalkenamerfolie:

Die Herstellung der Folie erfolgte durch Ausgießen einer Polyalkenamerdispersion in eine Silikonform mit den Maßen 15 cm x 10 cm x 0,5 cm (Länge x Breite x Höhe). Der ausgegossene Dispersionsfilm wurde für 48h bei 25°C getrocknet und anschließend für 10 Minuten bei einer Temperatur von 65°C getempert und anschließend drei Wochen bei Raumtemperatur gelagert.

Die trockenen und feuchten Sauerstoffpermeabilitäten wurden mit einem MOCON OXTRAN^{®} 2/21 gemessen, dessen Messprinzip auf der Trägergasmethode beruht. Trockenmessung bei 0% Luftfeuchte: ASTM D-3985; Feuchtemessung bei erhöhter Luftfeuchte: ASTM F1927. Bei der Trägergasmethode werden die maskierten Probenfilme (ohne Trägermaterial) mit einer Fläche, in diesem Fall von 5 cm², in einer luftdichten Zelle mit beidseitigem Hohlraum eingebaut. Auf der einen Seite der Probe wird ein Trägergas (95% N₂ und 5% H₂) und auf der anderen Seite das Messgas (100% O₂) drucklos vorbeigeleitet. Das durch die Probe diffundierende Messgas wird von dem Trägergas aufgenommen und zu einem coulometrischen Sensor geleitet. Somit kann die Sauerstoffkonzentration als Funktion der Zeit ermittelt werden. Alle Messungen wurden bei 23° Celsius und einer definierten relativen Luftfeuchte (RH) durchgeführt. Beide Seiten der Probe wurden der definierten Luftfeuchte ausgesetzt. Die Konditionierung des Gerätes und der Probe dauerte ca. eine halbe Stunde. Die Maschinenlaufzeit betrug für die Messungen 1 bis 4 Tage. Von jeder Probe wurde eine Doppelbestimmung durchgeführt. Für das Messverfahren wurde die Transmissionsrate (cm³/(m^{2*}Tag)) der Probe mit der mittleren Dicke der Folie, welche an 5 verschiedenen Stellen bestimmt wurde, auf 1 µm und 1 bar normalisiert. Durch diese Normalisierung ergab sich die Permeationsrate [cm³µm/(m^{2*}Tag^{*}bar)].

Die Ergebnisse (trocken: bei 0% Luftfeuchte) sind in Tabelle 2 zusammengefasst.

**Tabelle 2: Sauerstoffpermeabilität einer selbsttragenden Polyalkenamerfolie**

| Probe | Filmdicke [µm] | Transmissions rate 23°C, trocken [cm³/(m^{2*}Tag)] | Permeationsrate 23°C, trocken [cm³µm/(m^{2*}Tag *bar)] | Transmissions rate 23°C, 85% RH [cm³/(m^{2*}Tag)] | Permeationsrate 23°C, 85% RH [cm³µm/(m^{2*}Tag^{*} bar)] |
|---|---|---|---|---|---|
| D1 | 641 | 2660 | 1,71 × 10⁶ | - | - |
| D2 | 416 | 8,37 | 3,48 × 10³ | 8,95 | 3,82 × 10³ |
| D3 | 448 | 8,30 | 3,72 × 10³ | 5,88 | 2,63 × 10³ |
| D3*⁾ | 448 | 458 | | 632 | |

| | | | | | |
|---|---|---|---|---|---|
| *) Transmission nach 24 Stunden (nicht oxidiert) | | | | | |

Die Ergebnisse zeigen, dass die nicht oxidierten Proben D3 (vor Lagerung) und Probe D1 deutlich schlechtere Sauerstoffbarrierewirkung zeigen als die erfindungsgemäßen, oxidierten Proben D2 und D3 (nach Lagerung).

### Bestimmung der Wasserdampfpermeabilität einer selbsttragenden Polyalkenamerfolie:

Die Herstellung der Folie erfolgte wie oben beschrieben. Die Messung der Wasserdampfpermeabilitäten erfolgte bei 85% relativer Luftfeuchte mit einem MOCON PERMATRAN-W® 3/33, dessen Messprinzip ebenfalls auf der Trägergas-Methode beruht. Das Gerät arbeitet nach der ASTM F-1249. Bei der Trägergasmethode werden die maskierten Probenfilme (ohne Trägermaterial) mit einer Fläche, in diesem Fall von 5 cm², in einer luftdichten Zelle mit beidseitigem Hohlraum eingebaut. Auf der einen Seite der Probe wird ein Trägergas (trockenes N₂) und auf der anderen Seite das Messgas (N₂ + Wasserdampf) drucklos vorbeigeleitet. Das durch die Probe diffundierende Messgas wird von dem Trägergas aufgenommen und zu einem selektiven Sensor geleitet. Bei Wasserdampfmessgeräten wird ein IR-Sensor eingesetzt. Somit kann die Wasserdampfkonzentration als Funktion der Zeit ermittelt werden. Die Messungen wurden bei 23° Celsius durchgeführt. Die Konditionierung des Gerätes dauerte ca. 30 Minuten. Die Transmissionsrate der Probe wurde bei einer möglichst genauen Einstellung der relativen Luftfeuchte von 85% gemessen, der kleine messtechnische Fehler bei der Einstellung der Feuchte wurde anschließend rechnerisch korrigiert. Hierbei wurde angenommen, dass die Transmissionsrate linear mit der relativen Luftfeuchte im Messbereich korreliert. Für das Messverfahren wurde die Transmissionsrate (g/(m^{2*}Tag)) der Probe mit der mittleren Dicke der Folie, welche an 5 verschiedenen Stellen bestimmt wurde, normalisiert. Durch diese Normalisierung ergab sich die Permeationsrate (g^{*}µm/(m^{2*}Tag)). Die Ergebnisse sind in Tabelle 3 aufgeführt. Die Foliendicke betrug 439 µm.

**Tabelle 3: Wasserdampfpermeabilität einer selbsttragenden Polyalkenamerfolie**

| Probe | Transmissionsrate 23°C, 85% RH [g/(m^{2*}Tag)] | Permeationsrate 23°C, 85% RH [g^{*}µm/(m^{2*}Tag)] |
|---|---|---|
| D3 | 5,30 | 2330 |

### Bestimmung der Sauerstoffpermeabilität einer mit Polyalkenamer beschichteten Kautschukfolie:

Die Sauerstoffbarrierewirkung wurde gemessen durch Bestimmung der Sauerstofftransmission eines mit Poly(norbornen-co-octenamer) beschichteten Naturkautschuksubstrates. Die Bestimmung der Sauerstoffbarriere wurde mit einem MOCON OXTRAN^{®} 2/21 durchgeführt, dessen Messprinzip auf der Trägergasmethode beruht (ASTM D-3985). Gemessen wurde bei 23 °C mit synthetischer Luft (21 % Sauerstoff). Von jeder Probe wurde eine Doppelbestimmung durchgeführt. Die Sauerstoffbarrierewirkung wurde bei 0 %und 85 % relativer Luftfeuchte gemessen.

### Probe 1:

Unbeschichteter Naturkautschuk (Fa. Erwin Teile GmbH, Nürnberg),
Substratdicke: 346 µm

### Probe 2:

Ein Naturkautschuksubstrat (Fa. Erwin Teile GmbH, Nürnberg) mit einer Dicke von 346 µm wurde mit Ethanol gereinigt, mit Poly(norbornen-co-octenamer) der Dispersion D2 beschichtet, 10 min bei 50°C getrocknet und anschließend 14 Tage bei Raumtemperatur gelagert. Die Dicke der Poly(norbornen-co-octenamer)-Beschichtung auf dem Naturkautschuksubstrat betrug 35 µm.

Die Ergebnisse der Sauerstoffbarrierewirkung sind in Tabelle 4 zusammengefasst:

**Tabelle 4: Sauerstoffbarrierewirkunq auf Kautschuksubstrat**

| Probe | Transmissionsrate [cm³/(m^{2*}Tag)], 0% relativer Luftfeuchte | Transmissionsrate [cm³/(m^{2*}Tag)], 85% relativer Luftfeuchte |
|---|---|---|
| Probe 1 | 5010 | 5080 |
| Probe 2 | 29,1 | 40,6 |

## Patentansprüche

1. Verwendung eines Copolymers zur Verringerung der Gasdurchlässigkeit von Kautschukmaterial, wobei das Copolymer herstellbar ist durch ringöffnende Metathesepolymerisation von
a) mindestens einem ersten Olefinmonomer, ausgewählt aus der Gruppe bestehend aus cyclischen Olefinmonomeren mit mindestens einer endocyclischen C-C-Doppelbindung, wobei in alpha-Position zu der Doppelbindung kein ein Wasserstoffatom tragendes tertiäres Kohlenstoffatom vorhanden ist und
b) mindestens einem zweiten Olefinmonomer, ausgewählt aus der Gruppe bestehend aus cyclischen Olefinmonomeren mit einer endocyclischen C-C-Doppelbindung, wobei in mindestens einer alpha-Position zu der Doppelbindung ein Wasserstoffatom tragendes tertiäres Kohlenstoffatom vorhanden ist,
wobei das Copolymer zumindest teilweise oxidiert ist und
wobei das Copolymer nicht oder zu weniger als 1 mol%, bezogen auf die Summe der Monomere, aus polycyclischen Olefinmonomeren mit mindestens zwei C-C-Doppelbindungen hergestellt ist.

2. Verwendung nach dem vorhergehenden Anspruch, **dadurch gekennzeichnet, dass** das Copolymer in Form einer wässrigen Dispersion des Copolymers zur Herstellung eines Barrierefilms verwendet wird.

3. Verwendung nach einem der vorhergehenden Ansprüche, **dadurch gekennzeichnet, dass** das molare Verhältnis von Olefinmonomeren a) zu Olefinmonomeren b) von 99:1 bis 1:99 beträgt und/oder dass das Copolymer in einer Schichtdicke von mindestens 1 µm eingesetzt wird.

4. Verwendung nach einem der vorhergehenden Ansprüche, **dadurch gekennzeichnet, dass** das Copolymer zumindest teilweise an den zur endocyclischen Doppelbindung alpha-ständigen tertiären C-Atomen oxidiert ist.

5. Verwendung nach einem der vorhergehenden Ansprüche, **dadurch gekennzeichnet, dass** das Copolymer herstellbar ist durch ringöffnende Metathesepolymerisation von cis-Cycloocten und Norbornen.

6. Kautschukmaterial, ausgerüstet mit einem Barrierematerial in Form eines Copolymers, welches herstellbar ist durch ringöffnende Metathesepolymerisation von
a) mindestens einem ersten Olefinmonomer, ausgewählt aus der Gruppe bestehend aus cyclischen Olefinmonomeren mit mindestens einer endocyclischen C-C-Doppelbindung, wobei in alpha-Position zu der Doppelbindung kein ein Wasserstoffatom tragendes tertiäres Kohlenstoffatom vorhanden ist und
b) mindestens einem zweiten Olefinmonomer, ausgewählt aus der Gruppe bestehend aus cyclischen Olefinmonomeren mit einer endocyclischen C-C-Doppelbindung, wobei in mindestens einer alpha-Position zu der Doppelbindung ein Wasserstoffatom tragendes tertiäres Kohlenstoffatom vorhanden ist,
wobei das Copolymer zumindest teilweise oxidiert ist,
wobei das Copolymer nicht oder zu weniger als 1 mol%, bezogen auf die Summe der Monomere, aus polycyclischen Olefinmonomeren mit mindestens zwei C-C-Doppelbindungen hergestellt ist.

7. Kautschukmaterial, nach dem vorhergehenden Anspruch, **dadurch gekennzeichnet, dass** das Copolymer zumindest teilweise an den zur endocyclischen Doppelbindung alpha-ständigen tertiären C-Atomen oxidiert ist.

8. Kautschukmaterial, nach einem der Ansprüche 6 bis 7, **dadurch gekennzeichnet, dass** das Copolymer in einer Schichtdicke von mindestens 1 µm eingesetzt wird und das Copolymer an der Oberfläche der Copolymerschicht zumindest teilweise oxidiert ist.

9. Kautschukmaterial, nach einem der Ansprüche 6 bis 8, **dadurch gekennzeichnet, dass** das molare Verhältnis von Olefinmonomeren a) zu Olefinmonomeren b) von 99:1 bis 1:99 beträgt.

10. Kautschukmaterial nach einem der Ansprüche 6 bis 9, **dadurch gekennzeichnet, dass** das Copolymer herstellbar ist durch ringöffnende Metathesepolymerisation von cis-Cycloocten und Norbornen.

11. Kautschukmaterial nach einem der Ansprüche 6 bis 10, **dadurch gekennzeichnet, dass** die Kautschukbestandteile des Kautschukmaterials ausgewählt sind aus Dienkautschuk, Naturkautschuk, Butylkautschuk, synthetischem Polyisopren, Polybutadien, Styrol-Butadien-Copolymer, Isopren-Butadien-Kautschuk, Styrol-Isopren-Butadien-Kautschuk, Acrylnitril-Butadien-Kautschuk, Ethylen-Propylen-Kautschuk und Chloroprenkautschuk.

12. Kautschukmaterial nach einem der Ansprüche 6 bis 11, **dadurch gekennzeichnet, dass** es sich um einen Bestandteil eines Luftreifens handelt.

13. Kautschukmaterial nach dem vorhergehenden Anspruch, **dadurch gekennzeichnet, dass** es sich um eine Reifeninnenschicht eines Luftreifens oder um eine Reifenkarkasse eines Luftreifens handelt.

14. Luftreifen, umfassend Kautschukmaterial gemäß einem der Ansprüche 6 bis 13.

15. Luftreifen nach dem vorhergehenden Anspruch, **dadurch gekennzeichnet, dass** das Copolymer auf eine oder mehrere der folgenden Methoden aufgebracht ist:
- aufbringen auf mindestens einem Teil der Oberfläche oder auf der gesamten Oberfläche der Reifeninnenschicht;
- einbringen in das Material der Reifeninnenschicht;
- als Film, als trägerlose Folie oder als Beschichtung eines Folienträgers, wobei die Filme oder Folien zusätzlich zu einer kautschukbasierten Reifeninnenschicht oder als Ersatz für eine Reifeninnenschicht in das Reifeninnere eingebracht sein können;
- als Binder oder Beschichtung einer Fasercordeinlage des Luftreifens;
- als Laminat zwischen zwei oder mehr Trägerfolien, das in das Reifeninnere eingebracht ist.

16. Verfahren zur Ausrüstung eines Kautschukmaterials mit Gasbarriereeigenschaften, wobei mindestens ein Copolymer auf das Kautschukmaterial aufgebracht oder in das Kautschukmaterial eingebracht wird und das Copolymer herstellbar ist durch ringöffnende Metathesepolymerisation von
a) mindestens einem ersten Olefinmonomer, ausgewählt aus der Gruppe bestehend aus cyclischen Olefinmonomeren mit mindestens einer endocyclischen C-C-Doppelbindung, wobei in alpha-Position zu der Doppelbindung kein ein Wasserstoffatom tragendes tertiäres Kohlenstoffatom vorhanden ist und
b) mindestens einem zweiten Olefinmonomer, ausgewählt aus der Gruppe bestehend aus cyclischen Olefinmonomeren mit einer endocyclischen C-C-Doppelbindung, wobei in mindestens einer alpha-Position zu der Doppelbindung ein Wasserstoffatom tragendes tertiäres Kohlenstoffatom vorhanden ist,
wobei das Copolymer zumindest teilweise oxidiert wird,
und wobei das Copolymer nicht oder zu weniger als 1 mol%, bezogen auf die Summe der Monomere, aus polycyclischen Olefinmonomeren mit mindestens zwei C-C-Doppelbindungen hergestellt ist.

17. Verfahren nach dem vorhergehenden Anspruch, **dadurch gekennzeichnet, dass** die Ausrüstung nach einer oder mehreren der folgenden Methoden erfolgt: Imprägnierung durch Tränkung, durch Besprühen oder durch Bestreichen, Beschichten, Kalandrieren.

18. Verfahren nach einem der vorhergehenden Verfahrensansprüche, **dadurch gekennzeichnet, dass** das Copolymer in Form einer wässrigen Dispersion des Copolymers aufgebracht wird und durch Trocknen der Dispersion auf dem Trägersubstrat ein Film gebildet wird.

19. Verfahren nach einem der vorhergehenden Verfahrensansprüche, **dadurch gekennzeichnet, dass** die Oxidation des Copolymers durch Lagern in einer sauerstoffhaltigen Umgebung, vorzugweise unter Verwendung von Strahlungsenergie, thermischer Energie und/oder Oxidationsbeschleunigern erfolgt.

## Claims

1. The use of a copolymer for reducing the gas permeability of rubber material, where the copolymer can be produced via ring-opening metathesis polymerization of
a) at least one first olefin monomer selected from the group consisting of cyclic olefin monomers having at least one endocyclic C-C double bond, where no tertiary carbon atom bearing a hydrogen atom is present in alpha-position to the double bond, and
b) at least one second olefin monomer selected from the group consisting of cyclic olefin monomers having one endocyclic C-C double bond, where a tertiary carbon atom bearing a hydrogen atom is present in at least one alpha-position to the double bond,
where the copolymer has been oxidized at least to some extent, and
where the amount of polycyclic olefin monomer used to produce the copolymer with at least two C-C double bonds is zero or less than 1 mol%, based on the entirety of the monomers.

2. The use according to the preceding claim, wherein the copolymer is used in the form of an aqueous dispersion of the copolymer for producing a barrier film.

3. The use according to either of the preceding claims, wherein the molar ratio of olefin monomers a) to olefin monomers b) is from 99:1 to 1:99, and/or wherein the copolymer is used in a layer thickness of at least 1 µm.

4. The use according to any of the preceding claims, wherein the copolymer has been oxidized at least to some extent at the tertiary C atoms in alpha-position to the endocyclic double bond.

5. The use according to any of the preceding claims, wherein the copolymer can be produced via ring-opening metathesis polymerization of cis-cyclooctene and norbornene.

6. A rubber material modified with a barrier material in the form of a copolymer which can be produced via ring-opening metathesis polymerization of
a) at least one first olefin monomer selected from the group consisting of cyclic olefin monomers having at least one endocyclic C-C double bond, where no tertiary carbon atom bearing a hydrogen atom is present in alpha-position to the double bond, and
b) at least one second olefin monomer selected from the group consisting of cyclic olefin monomers having one endocyclic C-C double bond, where a tertiary carbon atom bearing a hydrogen atom is present in at least one alpha-position to the double bond,
where the copolymer has been oxidized at least to some extent, and
where the amount of polycyclic olefin monomers used to produce the copolymer with at least two C-C double bonds is zero or less than 1 mol%, based on the entirety of the monomers.

7. The rubber material according to the preceding claim, wherein the copolymer has been oxidized at least to some extent at the tertiary C atoms in alpha-position to the endocyclic double bond.

8. The rubber material according to claim 6 or 7, wherein the copolymer is used in a layer thickness of at least 1 µm and the copolymer at the surface of the copolymer layer has been oxidized at least to some extent.

9. The rubber material according to any of claims 6 to 8, wherein the molar ratio of olefin monomers a) to olefin monomers b) is from 99:1 to 1:99.

10. The rubber material according to any of claims 6 to 9, wherein the copolymer can be produced via ring-opening metathesis polymerization of cis-cyclooctene and norbornene.

11. The rubber material according to any of claims 6 to 10, wherein the rubber constituents of the rubber material have been selected from diene rubber, natural rubber, butyl rubber, synthetic polyisoprene, polybutadiene, styrene-butadiene copolymer, isoprene-butadiene rubber, styreneisoprene-butadiene rubber, acrylonitrile-butadiene rubber, ethylene-propylene rubber, and chloroprene rubber.

12. The rubber material according to any of claims 6 to 11, which involves a constituent of a pneumatic tire.

13. The rubber material according to the preceding claim, which involves an inner layer of a pneumatic tire or involves a carcass of a pneumatic tire.

14. A pneumatic tire comprising rubber material according to any of claims 6 to 13.

15. The pneumatic tire according to the preceding claim, wherein the copolymer has been applied by one or more of the following methods:
- application on at least one portion of the surface or on the entire surface of the tire inner layer;
- introduction into the material of the tire inner layer;
- in the form of film, in the form of foil without backing, or in the form of coating on a foil backing, where the films or foils can have been introduced in addition to a rubber-based tire inner layer, or as replacement for a tire inner layer, into the tire interior;
- in the form of binder or coating of a fiber cord insert of the pneumatic tire;
- in the form of laminate introduced into the tire interior between two or more supportive foils.

16. A process for modifying a rubber material by providing gas-barrier properties, where at least one copolymer is applied to the rubber material or is inserted into the rubber material, and the copolymer can be produced via ring-opening metathesis polymerization of
a) at least one first olefin monomer selected from the group consisting of cyclic olefin monomers having at least one endocyclic C-C double bond, where no tertiary carbon atom bearing a hydrogen atom is present in alpha-position to the double bond, and
b) at least one second olefin monomer selected from the group consisting of cyclic olefin monomers having one endocyclic C-C double bond, where a tertiary carbon atom bearing a hydrogen atom is present in at least one alpha-position to the double bond,
where the copolymer has been oxidized at least to some extent, and
where the amount of polycyclic olefin monomers used to produce the copolymer with at least two C-C double bonds is zero or less than 1 mol%, based on the entirety of the monomers.

17. The process according to the preceding claim, wherein the modification is achieved by one or more of the following methods: Impregnation via saturation, or via spraying, or via spreading, coating, or calendering.

18. The process according to any of the preceding process claims, wherein the copolymer is applied in the form of an aqueous dispersion of the copolymer, and a film is formed via drying of the dispersion on the substrate.

19. The process according to any of the preceding process claims, wherein the oxidation of the copolymer is achieved via exposure to an oxygen-containing environment, preferably with use of radiant energy or thermal energy, and/or of oxidation accelerators.

## Revendications

1. Utilisation d'un copolymère pour réduire la perméabilité aux gaz d'un matériau caoutchoutique, le copolymère pouvant être fabriqué par polymérisation par métathèse à ouverture de cycle de
a) au moins un premier monomère oléfinique, choisi dans le groupe constitué par les monomères oléfiniques cycliques contenant au moins une double liaison C-C endocyclique, aucun atome de carbone tertiaire portant un atome d'hydrogène n'étant présent en position alpha par rapport à la double liaison, et
b) au moins un second monomère oléfinique, choisi dans le groupe constitué par les monomères oléfiniques cycliques contenant une double liaison C-C endocyclique, un atome de carbone tertiaire portant un atome d'hydrogène étant présent à au moins une position alpha par rapport à la double liaison,
le copolymère étant au moins partiellement oxydé, et
le copolymère n'étant pas fabriqué ou étant fabriqué à hauteur de moins de 1 % en moles, par rapport à la somme des monomères, à partir de monomères oléfiniques polycycliques contenant au moins deux doubles liaisons C-C.

2. Utilisation selon la revendication précédente, **caractérisée en ce que** le copolymère est utilisé sous la forme d'une dispersion aqueuse du copolymère pour la fabrication d'un film de barrière.

3. Utilisation selon l'une quelconque des revendications précédentes, **caractérisée en ce que** le rapport molaire entre les monomères oléfiniques a) et les monomères oléfiniques b) est de 99:1 à 1:99 et/ou en ce que le copolymère est utilisé en une épaisseur de couche d'au moins 1 µm.

4. Utilisation selon l'une quelconque des revendications précédentes, **caractérisée en ce que** le copolymère est au moins partiellement oxydé sur les atomes C tertiaires en position alpha par rapport à la double liaison endocyclique.

5. Utilisation selon l'une quelconque des revendications précédentes, **caractérisée en ce que** le copolymère peut être fabriqué par polymérisation par métathèse à ouverture de cycle de cis-cyclooctène et de norbornène.

6. Matériau caoutchoutique, muni d'un matériau de barrière sous la forme d'un copolymère, qui peut être fabriqué par polymérisation par métathèse à ouverture de cycle de
a) au moins un premier monomère oléfinique, choisi dans le groupe constitué par les monomères oléfiniques cycliques contenant au moins une double liaison C-C endocyclique, aucun atome de carbone tertiaire portant un atome d'hydrogène n'étant présent en position alpha par rapport à la double liaison, et
b) au moins un second monomère oléfinique, choisi dans le groupe constitué par les monomères oléfiniques cycliques contenant une double liaison C-C endocyclique, un atome de carbone tertiaire portant un atome d'hydrogène étant présent à au moins une position alpha par rapport à la double liaison,
le copolymère étant au moins partiellement oxydé,
le copolymère n'étant pas fabriqué ou étant fabriqué à hauteur de moins de 1 % en moles, par rapport à la somme des monomères, à partir de monomères oléfiniques polycycliques contenant au moins deux doubles liaisons C-C.

7. Matériau caoutchoutique selon la revendication précédente, **caractérisé en ce que** le copolymère est au moins partiellement oxydé sur les atomes C tertiaires en position alpha par rapport à la double liaison endocyclique.

8. Matériau caoutchoutique selon l'une quelconque des revendications 6 à 7, **caractérisé en ce que** le copolymère est utilisé en une épaisseur de couche d'au moins 1 µm et le copolymère est au moins partiellement oxydé à la surface de la couche de copolymère.

9. Matériau caoutchoutique selon l'une quelconque des revendications 6 à 8, **caractérisé en ce que** le rapport molaire entre les monomères oléfiniques a) et les monomères oléfiniques b) est de 99:1 à 1:99.

10. Matériau caoutchoutique selon l'une quelconque des revendications 6 à 9, **caractérisé en ce que** le copolymère peut être fabriqué par polymérisation par métathèse à ouverture de cycle de cis-cyclooctène et de norbornène.

11. Matériau caoutchoutique selon l'une quelconque des revendications 6 à 10, **caractérisé en ce que** les constituants caoutchoucs du matériau caoutchoutique sont choisis parmi le caoutchouc diénique, le caoutchouc naturel, le caoutchouc de butyle, le polyisoprène synthétique, le polybutadiène, le copolymère de styrène-butadiène, le caoutchouc d'isoprène-butadiène, le caoutchouc de styrène-isoprène-butadiène, le caoutchouc d'acrylonitrile-butadiène, le caoutchouc d'éthylène-propylène et le caoutchouc de chloroprène.

12. Matériau caoutchoutique selon l'une quelconque des revendications 6 à 11, **caractérisé en ce qu'**il s'agit d'un constituant d'un pneu.

13. Matériau caoutchoutique selon la revendication précédente, **caractérisé en ce qu'**il s'agit d'une couche intérieure d'un pneu ou d'une carcasse d'un pneu.

14. Pneu, comprenant un matériau caoutchoutique selon l'une quelconque des revendications 6 à 13.

15. Pneu selon la revendication précédente, **caractérisé en ce que** le copolymère est appliqué par une ou plusieurs des méthodes suivantes :
- l'application sur au moins une partie de la surface ou sur la totalité de la surface de la couche intérieure de pneu ;
- l'introduction dans le matériau de la couche intérieure de pneu ;
- en tant que film, feuille sans support ou en tant que revêtement d'une feuille support, les films ou les feuilles pouvant être introduits en plus d'une couche intérieure de pneu à base de caoutchouc ou en remplacement d'une couche intérieure de pneu à l'intérieur d'un pneu ;
- en tant que liant ou revêtement d'un câblé en fibres d'un pneu ;
- en tant que stratifié entre deux feuilles supports ou plus, qui est introduit à l'intérieur du pneu.

16. Procédé de traitement d'un matériau caoutchoutique pour lui conférer des propriétés de barrière aux gaz, selon lequel au moins un copolymère est appliqué sur le matériau caoutchoutique ou introduit dans le matériau caoutchoutique, et le copolymère peut être fabriqué par polymérisation par métathèse à ouverture de cycle de
a) au moins un premier monomère oléfinique, choisi dans le groupe constitué par les monomères oléfiniques cycliques contenant au moins une double liaison C-C endocyclique, aucun atome de carbone tertiaire portant un atome d'hydrogène n'étant présent en position alpha par rapport à la double liaison, et
b) au moins un second monomère oléfinique, choisi dans le groupe constitué par les monomères oléfiniques cycliques contenant une double liaison C-C endocyclique, un atome de carbone tertiaire portant un atome d'hydrogène étant présent à au moins une position alpha par rapport à la double liaison,
le copolymère étant au moins partiellement oxydé, et
le copolymère n'étant pas fabriqué ou étant fabriqué à hauteur de moins de 1 % en moles, par rapport à la somme des monomères, à partir de monomères oléfiniques polycycliques contenant au moins deux doubles liaisons C-C.

17. Procédé selon la revendication précédente, **caractérisé en ce que** le traitement a lieu par une ou plusieurs des méthodes suivantes : imprégnation par immersion, par pulvérisation ou par enduction, revêtement, calandrage.

18. Procédé selon l'une quelconque des revendications de procédé précédentes, **caractérisé en ce que** le copolymère est appliqué sous la forme d'une dispersion aqueuse du copolymère et un film est formé sur le substrat support par séchage de la dispersion.

19. Procédé selon l'une quelconque des revendications de procédé précédentes, **caractérisé en ce que** l'oxydation du copolymère a lieu par entreposage dans un environnement contenant de l'oxygène, de préférence en utilisant une énergie de rayonnement, une énergie thermique et/ou des accélérateurs d'oxydation.
